# EUROPÄISCHE PATENTSCHRIFT

(11) **EP 2 087 478 B1**
(45) Veröffentlichungstag und Bekanntmachung des Hinweises auf die Patenterteilung: **12.01.2011**
(21) Anmeldenummer: 07847252.9
(22) Anmeldetag: 21.11.2007
(51) Int. Cl.: G08G 1/16, B62D 15/02

(54) **VERFAHREN ZUR KOLLISIONSVERMEIDUNG VON FAHRZEUGEN MIT OBJEKTEN**
METHOD FOR AVOIDING COLLISIONS OF VEHICLES WITH OBJECTS
PROCÉDÉ POUR ÉVITER LES COLLISIONS DE VÉHICULES AVEC DES OBJETS

(30) Priorität: 07.12.2006 DE 102006057751
(43) Veröffentlichungstag der Anmeldung: 12.08.2009
(73) Patentinhaber: Cobra Automotive Technologies SpA, 21100 Varese (IT)
(72) Erfinder: BAKER, Gion, 8307 Effretikon (CH); BENGTSSON, Ola, 8253 Diessenhofen (CH); DAISS, Armin, 93051 Regensburg (DE); HELLWIG, Hans-Peter, 93128 Regenstauf (DE); KUROCZKA, Matthias, 04746 Hartha (DE)
(74) Vertreter: Ullrich & Naumann
(86) Internationale Anmeldenummer: PCT/EP2007/062623
(87) Internationale Veröffentlichungsnummer: WO 2008/068142

(56) Entgegenhaltungen:
- EP-A- 1 447 271
- EP-A- 1 571 638
- EP-A- 1 642 769
- DE-A1-102004 011 088

## Beschreibung

Die Erfindung betrifft ein Verfahren zur Kollisionsvermeidung von Fahrzeugen mit Objekten gemäß dem unabhängigen Anspruch 1.

Bekannt sind einerseits Systeme zur automatischen Abstandseinhaltung zwischen zwei Fahrzeugen, auch unter Adaptive Cruise Control Systeme bekannt. Das ACC ermöglicht durch die Messung des Abstandes zum vorausfahrenden Fahrzeug und der Kenntnis der Bewegung des eigenen Fahrzeugs ein gleichmäßiges Hinterherfahren hinter dem vorausfahrenden Fahrzeug. Dazu greift eine ACC-Funktion aktiv in das Bremssystem, beim Bremsen, und in das Motormanagement, beim Beschleunigen, ein. Eine Warnfunktion als eine ACC-Funktion ist für den Fall vorhanden, dass die Regelgrenzen der ACC-Funktion über- oder unterschritten werden. Die einzige bekannte Warnfunktion des ACC besteht darin, bei einem plötzlich zu klein gewordenen Abstand zum vorausfahrenden Fahrzeug den Bremsdruck bis zur für das System maximal zulässigen Grenze aufzubauen. Dabei wird der Fahrer in geeigneter Weise auf die Gefahrensituation aufmerksam gemacht, damit dieser durch Betätigen des Bremspedals ggf. den maximal möglichen Bremsdruck bis zum Ansprechen des ABS oder dem Blockieren der Räder aufbaut.

Ein ACC-System ist vor allem für Geschwindigkeiten konzipiert, die deutlich über Schrittgeschwindigkeit liegen. Den vollen Nutzen (=Komfort) bringt ACC auf langen Autobahnfahrten. Entsprechend der Entfernung von zwei Fahrzeugen bei Autobahnfahrten werden Radar-Systeme eingesetzt.

Andererseits sind Systeme zur Unterstützung bei Einparkvorgängen bekannt, die mittels mehrerer Ultraschallsensoren Objekte in einem Abstandsbereich von ca. 2 m detektieren. In Abhängigkeit von der Entfernung der Objekte zum Sensor am Fahrzeug wird der Fahrer entsprechend gewarnt, üblicherweise mit einem akustischen Signal, z.B. einem sog. Beeper, dessen Lautstärke und Frequenz vom Abstand abhängig ist. Sind in einem Fahrzeug Abstandsmesssysteme vorne und hinten vorhanden, dann haben die Beeper unterschiedliche Frequenzen. Beim Einparken in enge Lücken kann es vorkommen, dass sowohl die vorderen, wie auch die hinteren Sensoren Objekte anmessen und die Lautsprecher aktivieren.

Nachteilig ist, dass der Fahrer keine übersichtliche Information über den Ist-Zustand bzw. die bevorstehende Gefahr erhält. Beim ACC-System reagiert die Fahrzeugelektronik automatisch und bei der Einparkhilfe können zu viele akustische Rückmeldungen zur Verwirrung führen.

Des weiteren ist aus der EP 1 642 769 A1 ein Verfahren mit den Merkmalen des Oberbegriffs des Anspruchs 1 bekannt.

Der vorliegenden Erfindung liegt daher die Aufgabe zugrunde, ein Verfahren bereitzustellen, das sowohl ein für ein Fahrzeug hinderliches Objekt erkennt, als auch ein Maß für die Gefahr angibt, mit diesem Objekt zu kollidieren.

Diese Aufgabe wird erfindungsgemäß durch ein Verfahren einer Einparkhilfe mit den Merkmalen des Anspruchs 1 gelöst. Vorteilhafte Aus- und Weiterbildungen, welche einzeln oder in Kombination miteinander eingesetzt werden können, sind Gegenstand der abhängigen Ansprüche.

Die Erfindung betrifft ein Verfahren zur Kollisionsvermeidung von Fahrzeugen mit Objekten unter Verwendung von Sensorsystemen zur Abstandsmessung mit folgenden Verfahrensschritten:
a) Messung des Abstandes von außerhalb des Fahrzeugs angeordneten Objekten zu am Fahrzeug angeordneten Sensoren.
b) Bestimmung des Fahrwegs basierend auf der aktuellen Geschwindigkeit des Fahrzeugs und der Lenkrichtung.
c) Bestimmung, ob das Fahrzeug mit einem durch die Sensoren detektierten Objekt durch die Lenkrichtung vorgegebenen Fahrweg kollidiert.
d) Anzeige im Fahrzeug, ob das Fahrzeug mit einem durch die Sensoren detektierten Objekt bei beibehaltenem bestimmten Fahrweg kollidiert,
wobei die Kenntnis des Fahrwegs zur Optimierung von aufeinander folgenden Messungen verschiedener Sensoren eingesetzt wird.

Durch die Einbeziehung der kinematischen Bewegung des Fahrzeugs und einer Funktion zur odometrischen Berechnung des Verfahrweges ist es möglich zu bewerten, ob erkannte Objekte mit dem Fahrzeug kollidieren werden und wie lange es noch bis zur Kollision dauert. Die Objekterkennung muss hierzu auch den Ort der Objekte berechnen. Mit Hilfe dieser Information ist es möglich, den Fahrer nur dann zu warnen, wenn wirklich Kollisionsgefahr besteht.

In einer bevorzugten Ausgestaltung der Erfindung wird der Fahrweg des Fahrzeugs durch die Lenkrichtung und die Geschwindigkeit des Fahrzeugs bestimmt.

In einer bevorzugten Ausgestaltung der Erfindung erfolgt die Abstandsmessung des Fahrzeugs zum Objekt mit Ultraschallsensoren.

In einer weiteren bevorzugten Ausgestaltung der Erfindung werden zur Abstandsmessung Sensoren situationsabhängig an der Vorder-, Hinter-oder an den Seiten des Fahrzeuges in den Messvorgang einbezogen. Dabei kann ein Entfernungsbereich bis zu 5m abgedeckt werden.

In einer weiteren bevorzugten Ausgestaltung der Erfindung wird die Kollisionsvermeidung des Fahrzeugs für Einparkvorgänge von Fahrzeugen verwendet.

Weitere Einzelheiten und Vorteile der Erfindung werden in Bezugnahme auf die beigefügte Abbildung erläutert.

Darin zeigen schematisch:
- Fig. 1a: ein Fahrzeug 1, dessen Fahrtrichtung auf ein Objekt gerichtet ist;
- Fig. 1b: ein Fahrzeug, dessen Fahrtrichtung auf kein Objekt gerichtet ist;
- Fig. 2a: ein Fahrzeug, das sich langsam einem Objekt nähert; und
- Fig. 2b: ein Fahrzeug, das sich schnell einem Objekt nähert.

Bei der nachfolgenden Beschreibung einer bevorzugten Ausführungsform der vorliegenden Erfindung bezeichnen gleiche Bezugszeichen gleiche oder vergleichbare Komponenten.

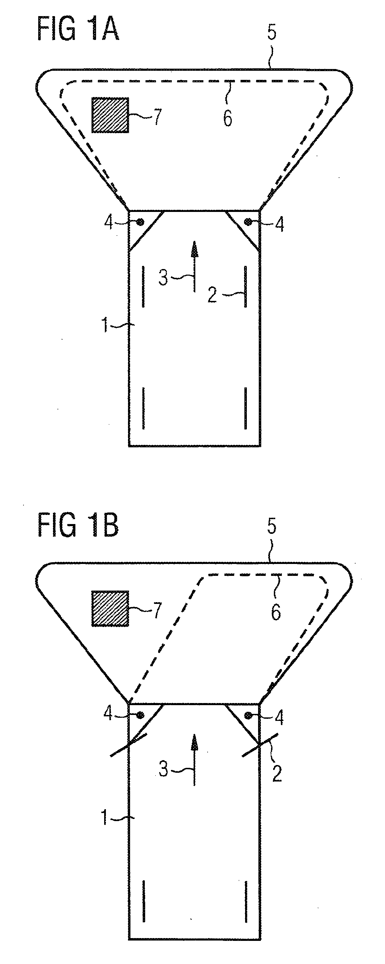

Figur 1a zeigt ein Fahrzeug 1, dessen Fahrtrichtung 3 auf ein Objekt 7 gerichtet ist. Die Lenkrichtung 2 ist hier über die Reifenstellung dargestellt. Der aktuelle Erfassungsbereich 5 kennzeichnet den Bereich, der von Sensoren 4 erfasst und gemessen werden kann. In Verbindung mit der Fahrtrichtung und einem ermittelten Objekt ist zusätzlich der Warnbereich 6 dargestellt. Der Warnbereich 6 ist der Bereich, bei dem Objekte, so sie denn vorhanden sind, eine Gefahr für die Bewegung des Fahrzeuges darstellen. Wenn das Objekt innerhalb dieses Warnbereichs 6 liegt, wird eine Warnung an den Fahrer ausgelöst. Im konkreten Beispiel ist die Lenkrichtung 2 parallel zur Fahrtrichtung 3, die nach vorne gerichtet ist. Ein Objekt 7 befindet sich innerhalb des Warnbereichs 6, so dass hier eine Warnung erfolgt. Abhängig von der Entfernung des Fahrzeugs 1 zum Objekt 7 wird die Warnung in ihrer Intensität mit abnehmender Entfernung zunehmen. Das System würde vor allen Objekten 7 in entsprechender Weise warnen, die sich im Warnbereich 6 befinden.

Figur 1b zeigt ein Fahrzeug 1, dessen Fahrtrichtung 3 nicht auf das Objekt 7 gerichtet ist. Analog zur Figur 1a, ist die Fahrtrichtung 3 des Fahrzeugs 1 nach vorne gerichtet. Die Lenkrichtung 2 ist hierbei nicht parallel zur Fahrtrichtung 3, sondern nach rechts eingeschlagen. Das Fahrzeug 1 bewegt sich außerhalb des Warnbereichs 6 bezüglich dem Objekt 7. Es erfolgt keine Warnung. Dem Fahrer bleibt diese überflüssige Warnung erspart.

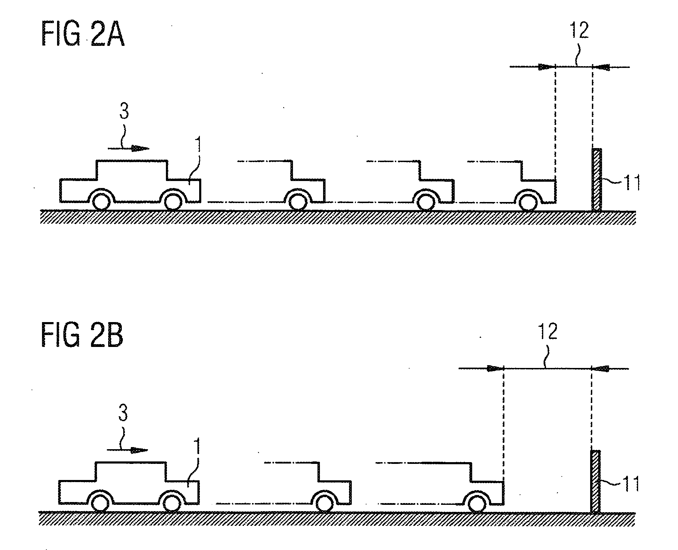

Figur 2a zeigt ein Fahrzeug 1, das sich langsam einem Objekt 11 nähert. Bei einer kritischen Entfernung 12 wird die höchste Warnstufe, z.B. ein Dauerton ausgelöst. Aufgrund einer vergleichsweise geringen Geschwindigkeit des Fahrzeugs 1 ist der Bremsweg bis zum vollständigen Halt ebenfalls vergleichsweise gering. Die Auslösung der höchsten Warnstufe, z.B. des Dauertons, kann also vergleichsweise spät oder, in Entfernung ausgedrückt, relativ nah am Objekt erfolgen.

Figur 2b zeigt ein Fahrzeug 1, das sich schnell einem Objekt 11 nähert. Der benötigte Bremsweg bis zum vollständigen Halt ist dementsprechend größer im Vergleich zur langsamen Fahrt aus Figur 2a. Der Fahrer sollte also schon eher oder, in Entfernung ausgedrückt, in vergleichsweise großer Entfernung vom System durch Dauerton von der Gefahr informiert werden. Die kritische Entfernung 12 ist dementsprechend ebenfalls größer.

Die Warnungen, die das System an den Fahrer ausgibt, sind abstandsbezogen. Bei einer großen Entfernung erfolgt eine weniger intensive Warnung und bei einer vergleichsweise kleineren Entfernung erfolgt eine dementsprechend intensivere Warnung.

Die Kenntnis des Fahrzeugkurses kann auch dazu eingesetzt werden, die Messreihenfolge der einzelnen Sensoren 4 zu optimieren, so dass die Sensoren 4, deren Messbereich nicht im Verfahrweg liegt, nicht angesteuert werden und dadurch die anderen Sensoren 4 häufiger abgefragt werden können.

Die Einbeziehung der Odometrie bei sehr langsamer Annäherung des Fahrzeugs 1 an ein Objekt 7, 11 kann dazu eingesetzt werden, um den Abstand zu Objekten 7, 11 auch bei Objekten im Totbereich der Sensoren 4 weiter zu aktualisieren und dem Fahrer anzuzeigen. Dies ermöglicht dem Fahrer dann nicht nur bis auf ca. 30 cm an ein Objekt 7 mit Parkhilfeunterstützung heranzufahren, sondern bis auf 5 cm - 10 cm.

Durch die Odometrie wird auch eine verlässlichere Detektion von Objekten 7 ermöglicht. Ist ein Objekt 7 einmal gemessen, so ist die Lage des Objektes 7 für Folgemessungen vorab bekannt. Die Signalfilterung kann hierdurch optimiert werden.

Bei folgenden beispielhaften Situationen kann durch die vorliegende Erfindung eine Verbesserung erreicht werden:

Bei der Einfahrt in Garagen kann erkannt werden, dass das Garagentor nicht im Verfahrkurs liegt. Der Fahrer wird durch die Einparkhilfe nicht fälschlicherweise gewarnt.

Bei schneller Fahrt kann die Warnung mittels Dauerton (max. Gefahrensignal) früher als üblich erfolgen. Bei bekannten Systemen ertönt ein Dauerton bei Abständen kleiner 30 cm.

Bei einer Fahrt nach vorne und einem Lenkwinkel nach rechts können Objekte, die im vorderen linken Bereich sind, "ausgeblendet" werden.

Bei einer Fahrt nach hinten und einem Lenkwinkel nach links kann der Bereich vorne neben dem Fahrzeug links gescannt werden und vorne rechts ausgeblendet werden. Dies ist z.B. besonders vorteilhaft mit Hilfe zusätzlicher Sensoren, die zur Seite gerichtet sind.

Beim Ausparken fährt man häufig sehr dicht an einem Fahrzeug vorbei. Die bekannten Einparkhilfen schalten dann stets auf Dauerton und der Fahrer muss selbst beurteilen, ob eine Kollision bei einer Weiterfahrt stattfindet. Das beschriebene Verfahren ermöglicht dagegen eine situationsabhängige Signalmeldung, je nachdem, ob das Ausparken/Weiterfahren gefahrlos möglich ist oder nicht.

Die vorliegende Erfindung eignet sich besonders für Geschwindigkeiten, die kleiner oder gleich der Schrittgeschwindigkeit sind. Den vollen Nutzen im Hinblick auf die Warnfunktion bringt das System vor allem bei Einparkvorgängen oder in Situationen, in denen es darauf ankommt, ein Fahrzeug 1 auf eng begrenztem Verkehrsraum sicher zu bewegen.

## Patentansprüche

1. Verfahren zur Kollisionsvermeidung von Fahrzeugen (1) mit Objekten (7, 11) unter Verwendung von Sensorsystemen (4) zur Abstandsmessung mit folgenden Verfahrensschritten:
a) Messung des Abstandes von außerhalb des Fahrzeugs (1) angeordneten Objekten (7, 11) zu am Fahrzeug angeordneten Sensoren (4).
b) Bestimmung des Fahrwegs basierend auf der aktuellen Lenkrichtung (2) des Fahrzeugs (1).
c) Bestimmung, ob das Fahrzeug (1) mit einem durch die Sensoren (4) detektierten Objekt (7, 11) durch die Lenkrichtung (2) vorgegebenen Fahrweg kollidiert, und
d) Anzeige im Fahrzeug (1), ob das Fahrzeug (1) mit einem durch die Sensoren (4) detektierten Objekt bei beibehaltenem bestimmten Fahrweg kollidiert, **dadurch gekennzeichnet, dass** die Kenntnis des Fahrwegs zur Optimierung von aufeinander folgenden Messungen verschiedener Sensoren (4) eingesetzt wird.

2. Verfahren nach Anspruch 1, **dadurch gekennzeichnet, dass** der Fahrweg des Fahrzeugs (1) durch die Lenkrichtung (2) und die Geschwindigkeit des Fahrzeugs (1) bestimmt wird.

3. Verfahren nach Anspruch 1 oder 2, **dadurch gekennzeichnet, dass** die Abstandsmessung des Fahrzeugs (1) zum Objekt (7, 11) mit Ultraschallsensoren erfolgt.

4. Verfahren nach einem der vorherigen Ansprüche, **dadurch gekennzeichnet, dass** zur Abstandsmessung Sensoren (4) situationsabhängig an der Vorder- und/oder Hinterseite und/oder an den Seiten des Fahrzeuges (1) in den Messvorgang einbezogen werden.

5. Verfahren nach einem der vorherigen Ansprüche, **dadurch gekennzeichnet, dass** die Kollisionsvermeidung des Fahrzeugs (1) mit Objekten für Einparkvorgänge von Fahrzeugen (1) verwendet wird.

## Claims

1. A method for avoiding collisions of vehicles (1) with objects (7, 11) using sensor systems (4) for distance measurement with the following method steps:
a) measuring the distance between objects (7, 11) located outside the vehicle (1) and sensors (4) arranged on the vehicle;
b) determining the travel path based on the current steering direction (2) of the vehicle (1);
c) determining whether the vehicle (1) will collide with an object (7, 11) detected by the sensors (4) as a result of the travel path predetermined by the steering direction (2), and
d) indicating in the vehicle (1) whether the vehicle (1) will collide with an object detected by the sensors (4) if a specific travel path is maintained,
**characterised in that** knowledge of the travel path is used to optimise successive measurements of different sensors (4).

2. A method according to claim 1, **characterised in that** the travel path of the vehicle (1) is determined by the steering direction (2) and the speed of the vehicle (1).

3. A method according to claim 1 or 2, **characterised in that** measurement of the distance from the vehicle (1) to the object (7, 11) is effected by ultrasound sensors.

4. A method according to any one of the preceding claims, **characterised in that**, for the distance measurement, depending on the situation sensors (4) on the front and/or rear and/or on the sides of the vehicle (1) are included in the measuring process.

5. A method according to any one of the preceding claims, **characterised in that** avoiding collisions of the vehicle (1) with objects is used for parking manoeuvres of vehicles (1).

## Revendications

1. Procédé destiné à éviter des collisions entre des véhicules (1) et des objets (7, 11) utilisant des systèmes de capteurs (4) pour mesurer la distance et présentant les étapes de procédé suivantes :
a) mesure de la distance entre des objets (7, 11) disposés à l'extérieur du véhicule (1) et des capteurs (4) disposés sur le véhicule.
b) détermination du chemin parcouru sur la base de la direction de braquage (2) actuelle du véhicule (1).
c) déterminer si le véhicule (1) entre en collision avec un objet (7, 11) détecté par les capteurs (4) sur le chemin parcouru prédéfini par la direction de braquage (2), et
d) affichage sur le véhicule (1) pour savoir si le véhicule (1) entre en collision avec un objet détecté par les capteurs (4) si le chemin parcouru déterminé est conservé,
**caractérisé en ce que** la connaissance du chemin parcouru est utilisée pour l'optimisation de mesures consécutives de différents capteurs (4).

2. Procédé selon la revendication 1, **caractérisé en ce que** le chemin parcouru du véhicule (1) est déterminé par la direction de braquage (2) et la vitesse du véhicule (1).

3. Procédé selon la revendication 1 ou 2, **caractérisé en ce que** la mesure de la distance entre le véhicule (1) et l'objet (7, 11) s'effectue avec des capteurs à ultrasons.

4. Procédé selon l'une quelconque des revendications précédentes, **caractérisé en ce que**, pour la mesure de la distance, des capteurs (4) sont intégrés dans le processus de mesure en fonction de la situation sur le côté avant et/ou le côté arrière et/ou sur les côtés du véhicule (1).

5. Procédé selon l'une quelconque des revendications précédentes, **caractérisé en ce que** le fait d'éviter des collisions entre le véhicule (1) et des objets est utilisé pour des opérations de stationnement de véhicules (1).
